# EUROPÄISCHE PATENTSCHRIFT

(11) **EP 1 567 756 B1**
(45) Veröffentlichungstag und Bekanntmachung des Hinweises auf die Patenterteilung: **15.08.2012**
(21) Anmeldenummer: 03812183.6
(22) Anmeldetag: 26.11.2003
(51) Int. Cl.: F02C 7/143

(54) **VERFAHREN ZUR STEUERUNG DER FLÜSSIGKEITSEINSPRITZUNG IN EINEN ZUSTRÖMKANAL EINER KRAFT- ODER ARBEITSMASCHINE**
METHOD FOR CONTROLLING THE INJECTION OF LIQUID INTO AN INFLOW CHANNEL OF A PRIME MOVER OR MACHINE
PROCEDE POUR REGULER L'INJECTION DE LIQUIDE DANS UN CANAL D'AMENEE D'UN MOTEUR OU D'UNE MACHINE DE TRAVAIL

(30) Priorität: 02.12.2002 DE 10256193
(43) Veröffentlichungstag der Anmeldung: 31.08.2005
(73) Patentinhaber: Alstom Technology Ltd, 5400 Baden (CH)
(72) Erfinder: HOFFMANN, Jürgen, CH-5417 Untersiggenthal (CH); MATZ, Charles Raymond, CH-5432 Neuenhof (CH)
(86) Internationale Anmeldenummer: PCT/EP2003/050901
(87) Internationale Veröffentlichungsnummer: WO 2004/051062

(56) Entgegenhaltungen:
- EP-A- 0 889 212
- EP-A- 1 108 870
- EP-A- 1 203 866
- GB-A- 2 382 847
- US-A- 4 569 195
- US-A1- 2002 026 783
- US-B1- 6 470 667

## Beschreibung

### Technisches Anwendungsgebiet

Die Erfindung bezieht sich auf ein Verfahren zur Steuerung der Flüssigkeitseinspritung in einen Zuströmkanal einer Kraft- oder Arbeitsmaschine gemäss dem Oberbegriff des Anspruchs 1. Sie bezieht sich weiterhin auf eine Vorrichtung zur Durchführung des Verfahrens.

### Stand der Technik

Bei der adiabatischen Verdichtung eines Gases wird dieses erhitzt. Durch die Erhitzung und die damit verbundene Volumenvergrösserung wird die notwendige Kompressionsarbeit erhöht. Bei dem Kompressor einer Gasturbogruppe hat dieses unterschiedliche negative Folgen. Aufgrund der erhöhten Eintrittstemperatur in die Brennkammer kann die Gasturbogruppe geringer gefeuert werden. Die Kompression erfordert einen grösseren Anteil der Turbinenarbeit, und läuft mit einem schlechteren Wirkungsgrad ab. Zudem steht aus dem Verdichter abgezweigte Kühlluft nur auf bereits stark erhöhtem Temperaturniveau zur Verfügung. In der Folge werden die Leistungs- und Wirkungsgradpotenziale der Gasturbogruppe negativ beeinflusst.

In der Folge ist man bestrebt, diese Temperaturerhöhung zu begrenzen, beispielsweise durch Zwischenkühlungsstufen während der Verdichtung. Auch die sogenannte Isotherm-Kompression ist in diesem Zusammenhang von Interesse. Die Einspritzung einer Flüssigkeit, insbesondere Wasser, in den Kompressor oder, besonders einfach zu realisieren, in dessen Zuströmung in einer Weise, dass Flüssigkeitstropfen in den Kompressor eintreten, ist dabei eine besonders einfache Möglichkeit, durch die Verdunstung dieser Flüssigkeit eine Innenkühlung des Verdichters zu erzielen. Indem eine Flüssigkeit in den Kompressor oder in die dem Kompressor vorgelagerten Bereiche eingedüst wird, kann durch die Verdunstung innerhalb des Kompressors ein ähnlicher Kühleffekt wie mit einem Zwischenkühler-Wärmetauscher erzielt werden. Hierbei handelt es sich um eine Annäherung an die sogenannte Quasi-Isothermverdichtung. Aufgrund der mit Hilfe der Quasi-Isothermverdichtung erzielten niedrigeren Temperaturen und der damit verbundenen höheren spezifischen Dichte des zu komprimierenden Gases wird für die Komprimierung weniger Energie benötigt. Bereits die FR 1.563.749 beschreibt die positiven Effekte der Einspritzung von Flüssigkeit in Verdichter, betont aber gleichzeitig die Wichtigkeit einer feinen Zerstäubung und gleichmässigen Verteilung der Flüssigkeit.

Es ist an sich nicht ungewöhnlich, dass Wasser in einen Verdichter während des Betriebes eindringt, so während der Reinigung einer stationären Gasturbine oder in einem Flugzeugtriebwerk beim Flug durch Wolken oder Regen. Da jedoch eine permanente Wassereinspritzung zu Problemen aufgrund von Schaufelerosion führen könnte, muss die eingedüste Flüssigkeit sehr fein zu sehr kleinen Tröpfchen zerstäubt sein sein. Daher besteht die Herausforderung bei entsprechenden technischen Lösungen bisher darin, eine Wassereindüsung mit sehr kleinen Tröpfchen, gewöhnlich 0,9 - 5 µm im Durchmesser bei der sogenannten Flash-Zerstäubung und 20 - 40 µm bei der Hochdruckzerstäubung, zu realisieren. Gleichzeitig muss die eingedüste Menge dieser Tröpfchen so groß sein, dass sie dazu ausreicht, die Luft während der Verdichtung abzukühlen.

Aus der WO 99/67519 ist die sogenannte Swirl-Flash Technologie zur Erzeugung feinster Tropfen bekannt. Sie basiert auf dem Grundprinzip, dass eine Flüssigkeit druckbeaufschlagt, überhitzt und anschließend mittels einer Düse eingedüst wird. Die Flüssigkeit, insbesondere Wasser, tritt aus der Düse in einem typischen Kegel heraus. Die Tröpfchengröße beträgt ungefähr 25 µm. Da sich die Temperatur der Flüssigkeit erheblich über dem Siedepunkt bei Umgebungsdruck befindet, tritt ein spontanes Sieden ein, so, dass jedes Tröpfchen während des Eindüsungsvorganges von 25 µm in etwa 1000 Fragmente mit einer Größe von ungefähr 2,5 µm explodiert.

Für den angestrebten Zweck ist auch die Kinetik der Verdunstung von Bedeutung. Die Verweildauer in einem Verdichter ist kurz. Für einen axialen Verdichter liegt sie normalerweise bei etwa 10 Millisekunden, für einen Radialkompressor sogar niedriger. Dies bedeutet, dass die Verdunstung innerhalb von Millisekunden erfolgen muss. Wie bereits erläutert, ermöglichen die sehr feinen Tröpfchen in Verbindung mit der hohen Temperatur die gewünschte schnelle Verdunstung.

In der US 5,930,990 ist eine Vorrichtung sowie ein Verfahren zur Eindüsung eines Kühlmediums in den Zuluftstrom einer Gasturbinenanlage beschrieben. Hierbei sind die Einspritzdüsen gitterförmig an oder in einer Rohrträgeranordnung befestigt. Diese Rohrträgeranordnung, über die auch die Versorgung der Düsen mit Flüssigkeit erfolgt, kann an verschiedenen Stellen im Zuströmkanal der Gasturbogruppe angeordnet sein. Die Anordnung der Düsen kann hierbei in Abhängigkeit der jeweiligen Strömungsparameter erfolgen. Darüber hinaus ist es möglich, jeweils mehrere Düsen zu einer Gruppe zusammenzufassen, so, dass die eingespritzte Flüssigkeitsmenge durch mehrstufiges Zuschalten der Düsengruppen beispielsweise an den veränderlichen Frischluftstrom angepasst werden kann. Die Variation des Flüssigkeitsmassenstroms durch mehrstufiges Zuschalten hat den Vorteil, dass der Druckabfall über die aktiven Düsen und damit die Zerstäubungsgüte bei unterschiedlichen Flüssigkeitsmassenströmen weitgehend konstant bleiben. Andererseits kann durch Zu- und Abschalten verschiedener Düsengruppen das Profil der Tropfenbeladung der Ansaugluft stark variieren und steile Gradienten aufweisen.

Zusätzlich zu einer geeigneten Ausführung der Düsen ist es nötig, Flüssigkeitstropfen möglichst homogen über den gesamten Zuströmungsquerschnitt in die Zuströmung einzudüsen. Neben der Zerstäubungsgüte nennt die FR 1.563.749 auch die homogene, gleichmässige Verteilung der eingebrachten Flüssigkeit als mitentscheidend. Eine stark ungleichmässige Verteilung hat eine lokal unterschiedliche Kühlung im Verdichter zur Folge. Die daraus resultierenden warmen und kalten Strähnen reduzieren den Pumpabstand des Kompressors und können im Extremfall zur Verkrümmung des Gehäuses führen.

### Darstellung der Erfindung

Es ist daher Aufgabe der vorliegenden Erfindung, ein Verfahren der eingangs genannten Art anzugeben, welches die Nachteile des Standes der Technik vermeidet. Es ist insbesondere ein Verfahren anzugeben, die Flüssigkeitseindüsung derart zu steuern, dass auch beim Betrieb nur eines Teiles der Einspritzdüsen ein für den Betrieb des nachgeordneten Verdichters möglichst günstiges Profil der Tropfenbeladung erzeugt wird.

Diese Aufgabe wird mittels der Gesamtheit der Merkmale des Patentanspruchs 1 gelöst.

Kern der Erfindung ist es also, die Flüssigkeitseinspritzung so zu steuern, dass soweit als irgend möglich ein symmetrisches Muster der Einspritzung hergestellt wird. Dies wird erreicht, indem auf jeder Seite einer Symmetrielinie der Einspritzvorrichtung so viele Düsen mit Flüssigkeit beaufschlagt werden, dass die Summe der durch die einzelnen Zerstäuberdüsen durchgesetzten Teilmassenströme auf jeder Seite der Symmetrielinie wenigstens näherungsweise gleich ist. Unter der Symmetrielinie ist hierbei eine Symmetrielinie der Einspritzvorrichtung im Einbauzustand zu verstehen. Das heisst, die Einspritzvorrichtung selbst könnte auch unsymmetrisch sein, sofern der Zuströmkanal eine Linie aufweist, an der er wenigstens näherungsweise symmetrisch ist; es ist dann, wie für den Fachmann ersichtlich, die Symmetrie des Zuströmkanals entscheidend. Hierzu wird die Flüssigkeitszufuhr zu einzelnen oder auch zu mehreren zu einer Gruppe zusammengefassten Zerstäuberdüsen bevorzugt durch ein Absperrorgan selektiv freigegeben oder abgesperrt. Wenn alle Zerstäuberdüsen identisches Durchflussverhalten aufweisen, das heisst den gleichen relativen Teilmassenstrom, bezogen auf den Gesamtmassenstrom der gesamten Einspritzvorrichtung bei gleichen Druckverhältnissen, werden auf beiden Seiten einer Symmetrielinie gleich viele Zerstäuberdüsen, bevorzugt in spiegelbildlicher Anordnung, beaufschlagt. In einer bevorzugten Ausführungsform der Erfindung werden mehrere Zerstäuberdüsen zu wenigstens einer Düsengruppe zusammengefasst und gemeinsam mit Flüssigkeit beaufschlagt. In einer bevorzugten Ausführungsform der Erfindung, bei der wenigstens eine Anzahl von Zerstäuberdüsen auf wenigstens einem Düsenrohr angeordnet ist, werden alle auf einem Düsenrohr angeordneten Düsen gemeinsam mit Flüssigkeit beaufschlagt. Im Weiteren wird insbesondere in den Ausführungsbeispielen von einer derartigen Düsenrohrkonstruktion ausgegangen. Die dort für die Ansteuerung von Düsenrohren getroffenen Aussagen können jedoch ohne weiteres auf die Ansteuerung einzelner oder in Gruppen zusammengefasster, nicht auf Rohren angeordneter Düsen übertragen werden.

Bei einer Einspritzvorrichtung mit einer Düsenrohrkonstruktion, wie sie an sich aus dem Stand der Technik bekannt ist, erfolgt die Steuerung der Flüssigkeitseinspritzung erfindungsgemäss derart, dass auf jeder Seite einer Symmetrielinie der Einspritzvorrichtung so viele Rohre mit Flüssigkeit beaufschlagt werden, dass die durch die Rohre durchgesetzten Massenströme auf jeder Seite der Symmetrielinie gleich sind; bevorzugt wird eine spiegelbildliche Beaufschlagung der Düsenrohre mit Flüssigkeit vorgenommen. Die Beaufschlagung erfolgt, indem die Flüssigkeitszufuhr zu einzelnen oder auch zu mehreren zusammengefassten Düsenrohren bevorzugt durch ein Absperrorgan freigegeben oder abgesperrt wird. Die Beaufschlagung einer Gruppe von Rohren kann dabei erfolgen, indem mehrere Absperrorgane simultan geschaltet werden.

In einer Ausführungsform der Erfindung sind die Versorgungsleitungen der zu einer Gruppe zusammengefassten Düsen und/oder Rohre an einem stromauf gelegenen Punkt zusammengeführt, dergestalt, dass alle Düsen und/oder Rohre der Gruppe über ein gemeinsames Absperrorgan ansteuerbar sind. Die Beaufschlagung einzelner Düsen und/oder Rohre über jeweils getrennte Absperrorgane gewährleistet dabei eine höhere Flexibilität der zu realisierenden Einspritzmuster, während die Ansteuerung einer gesamten Gruppe über ein gemeinsames Absperrorgan zu einer apparativen und steuerungstechnischen Vereinfachung führt.

In einer bevorzugten Ausführungsform der Erfindung wird die Druckdifferenz über die Einspritzdüsen konstant gehalten. Der Flüssigkeitsmassenstrom ist dann in guter Näherung dem gesamten beaufschlagten Düsenquerschnitt proportional; unter der Massgabe, dass alle Düsen identisch sind, was mit Vorteil anzustreben ist, ist der Flüssigkeitsmassenstrom der Anzahl der beaufschlagten Düsen proportional. In einer bevorzugten Ausführungsform weisen alle Düsen ein identisches Durchflussverhalten auf. In einer Ausführungsform weisen weiterhin alle Rohre identische Düsenbestückung auf. Der eingespritzte Flüssigkeitsmassenstrom ist dann der Anzahl der beaufschlagten Düsen und/oder Rohre proportional. Falls dies nicht der Fall ist, kann jedem Rohr ein individueller Teilmassenstrom zugeordnet werden. Wenn Druckzerstäuberdüsen zur Eindüsung der Flüssigkeit eingesetzt werden, so liegt der Druckabfall über die Düsen in der Regel bei einigen 10 bar, beispielsweise 30 - 50 bar. Die Druckänderung im Zuströmkanal ist demgegenüber vernachlässigbar, so, dass es in der Regel genügt, den Vordruck der Flüssigkeit in den Rohren oder im Zuleitungssystem zu den Düsen und/oder Rohren konstant zu halten. Hierdurch kann sehr einfach der von einer Flüssigkeitspumpe geförderte Massenstrom so geregelt werden, dass der Vordruck konstant bleibt.

In einer bevorzugten Ausführungsform der Erfindung werden auf jeder Seite der Symmetrieachse spiegelbildlich zueinander angeordnete Düsen und/oder Rohre mit Flüssigkeit beaufschlagt. In einer weiteren Ausführungsform werden möglichst gleichmässig über den Querschnitt verteilte Düsen und/oder Rohre mit Flüssigkeit beaufschlagt, beispielsweise bei einer äquidistanten Anordnung der Rohre jedes zweite für 50% relativen Einspritzmassenstrom oder jedes dritte für 33% relativen Einspritzmassenstrom. Wie oben angedeutet, werden in einer Vorzugsvariante der Erfindung jeweils mehrere Düsen und/oder Rohre zu einer Gruppe zusammengefasst und gemeinsam mit Flüssigkeit beaufschlagt; es versteht sich von selbst, dass dieses auch für den Ausschaltvorgang gilt. Die Zusammenfassung zu einer Gruppe kann dabei über die Steuerung des Verfahrens erfolgen, indem eine gemeinsame simultane Schaltung mehrerer Absperrorgane vorgesehen ist; andererseits können mehrere Düsen und/oder Rohre von einem gemeinsamen Absperrorgan aus versorgt werden, stromab dessen sich die Flüssigkeitszuleitung zu einzelnen Düsen und/oder Rohren verzweigt. Von Vorteil ist es dabei wieder, wenn die Anordnung Düsen und/oder Rohre in einer Gruppe symmetrisch zu einer Symmetrielinie oder Mittelachse der Einspritzvorrichtung erfolgt.

In einer Ausführungsform der Erfindung werden die Düsen und/oder Rohre derart zu Gruppen zusammengefasst, dass der relative Gruppenmassenstrom, nachfolgend auch kurz Gruppenmassenstrom genannt, also der durch die Gruppe durchgesetzte Massenstrom im Verhältnis zum Flüssigkeitsmassenstrom der gesamten Einspritzvorrichtung bei gleichen Drücken, konstant ist. In einer weiteren Ausführungsform weist ein Teil der Gruppen einen ersten Gruppenmassenstrom auf, während wenigstens eine Gruppe einen kleineren Gruppenmassenstrom aufweist, der besonders vorteilhaft rund 50% des ersten Gruppenmassenstroms entspricht. Bei einer Steigerung des gesamten Einspritzmassenstromes wird dann vorteilhaft immer jeweils eine zweite Gruppe mit kleinem Gruppenmassenstrom beaufschlagt, und bei einer weiteren Steigerung des Gesamtmassenstromes eine erste Gruppe mit grossem Gruppenmassenstrom zu- und gleichzeitig die Gruppe mit dem kleineren Gruppenmassenstrom ausgeschaltet. Das Massenstrominkrement bei jedem Schaltvorgang entspricht dann dem kleinen Gruppenmassenstrom; die Anzahl der Schaltgruppen wird jedoch gegenüber einer Schaltung, bei der alle Gruppen den kleinen Gruppenmassenstrom aufweisen und sequentiell geschaltet werden, bei gleichem Massenstrominkrement nahezu halbiert.

Wohlverstanden müssen die Gruppen untereinander keineswegs sequentiell mit zeitlichen Inkrementen geschaltet werden; es ist sogar vorteilhaft, wenn ein bestimmter Massenstrom angestrebt wird, alle für diesen Massenstrom notwendigen Gruppen simultan zu schalten, um den Gesamtmassenstrom über der Zeit in einem einzigen Schritt anzuheben. Wenn im Zusammenhang von dieser Erfindung von Massenstrominkrementen und von Schaltstufen gesprochen wird, so ist hierunter die Sequenz der Schaltung über den einzustellenden Massenstrom verstanden. Dieser kann aber, wenn die zu schaltenden Gruppen bekannt sind, in einem einzigen Schritt eingestellt werden, so, dass keine zeitlich gestuften Inkremente vorliegen. Dies ist sogar betriebstechnisch von Vorteil, weil die Gasturbogruppe nur einmal mit einer transienten Veränderung der Betriebsbedingungen konfrontiert wird, und nicht mehrmals hintereinander, wie es bei einem zeitlich inkrementellen Zuschalten der Massenstrominkremente der Fall wäre.

In einer weiteren bevorzugten Ausführungsform des Verfahrens werden Düsen und/oder Rohre derart zu Gruppen zusammengefasst und gemeinsam mit Flüssigkeit beaufschlagt, dass die Gruppenmassenströme geometrisch gestuft sind. Insbesondere wird dabei eine binäre Stufung der Gruppenmassenströme, mit dem Verhältnis 2, bevorzugt. Dabei Verhalten sich die Gruppenmassenströme bezogen auf den kleinsten Gruppenmassenstrom wie 1:2:4:8, und so fort, das heisst jede Gruppe mit einem grösseren Gruppenmassenstrom weist den doppelten Gruppenmassenstrom auf wie die Gruppe mit dem nächstkleineren Gruppenmassenstrom. Es ist dann beispielsweise möglich, mit nur 4 schaltbaren Gruppen 15 unterschiedliche äquidistante Gesamtmassenströme einzustellen, oder 31 äquidistante Massenströme mit 5 Gruppen. Allgemein sind mit N binär gestuften Gruppen 2^{N}-1 gleich äquidistante Massenströme realisierbar.

Mit dem vorliegenden Verfahren ist es möglich, die Stufung der Einspritzmenge des Kühlmediums angepasst an die Betriebsweise, insbesondere die jeweils lieferbare bzw. benötigte Leistung, der Kraft- oder Arbeitsmaschine während ihres Betriebes vorzunehmen. So werden die verschiedenen Einspritzgruppen, denen die verschiedenen Einspritzdüsen zugeordnet sind, während des Betriebs zur Steigerung oder Verringerung der Kühlleistung derart zuund/oder abgeschaltet, dass die Veränderung der Menge des eingespritzten Kühlmediums von Stufe zu Stufe in kleinen Schritten möglich ist, und es können dementsprechend fein gestufte Massenstrom-Sollwerte angefahren werden.

In bezug auf die homogene Eindüsung der Flüssigkeit ist bevorzugt auch das Strömungsfeld im Zuströmkanal zu beachten. Dabei ist für die Eindüsung der Flüssigkeit auch von Bedeutung, ob an den entsprechenden Einspritzstellen eine laminare oder eine turbulente Strömung vorherrscht. Darüber hinaus ist zu beachten, dass auch die Strömungsgeschwindigkeiten über den Querschnitt des Ansaugkanales veränderlich sind. Die räumliche Verteilung der eingespritzten Flüssigkeit erfolgt in einer weiteren Ausführungsform unter Berücksichtigung dieser Strömungsparameter.

### Kurze Beschreibung der Zeichnungen

Das erfindungsgemässe Verfahren wird nachfolgend anhand der Zeichnung näher erläutert. Im Einzelnen zeigen:
Figur 1 eine Prinzipskizze einer Gasturbogruppe mit einer in einem Zuströmkanal angeordneten Einspritzvorrichtung;
Figur 2 eine Einspritzvorrichtung für einen rechteckigen Zuströmkanalquerschnitt mit binärer Stufung von Rohrgruppen;
Figur 3 ein weiteres Beispiel einer Einspritzvorrichtung für einen rechteckigen Zuströmkanalquerschnitt;
Figur 4 eine Einspritzvorrichtung für einen kreisringförmigen Zuströmkanal mit radialer Orientierung von Düsenrohren; und
Figur 5 eine Einspritzvorrichtung für einen kreisringförmigen Zuströmkanal mit Umfangsorientierung von Düsenrohren.

### Wege zur Ausführung der Erfindung

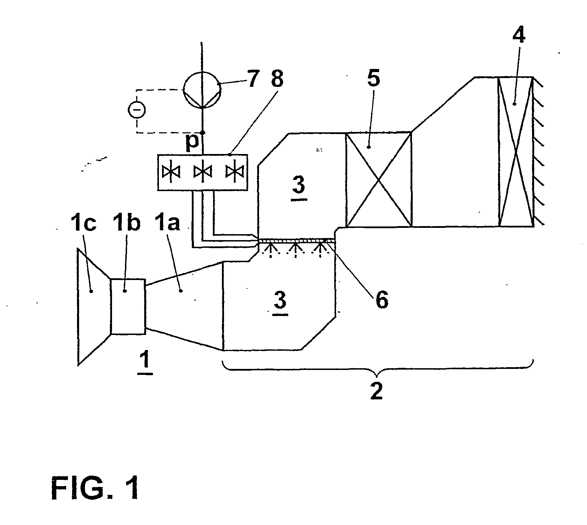

Figur 1 illustriert schematisch die Anwendung des erfindungsgemässen Verfahrens anhand des Zuströmkanals einer Gasturbogruppe 1. Die beispielhaft dargestellte Gasturbogruppe weist ohne Beschränkung der Allgemeinheit einen Verdichter 1a, eine Brennkammer 1b und eine Turbine 1c auf. Dem Verdichter ist ein Ansaugbereich 2 zur Aufbereitung der im Zuströmkanal 3 zugeführten Ansaugluft vorgeschaltet. In dem Ansaugbereich sind ein Luftfilter 4 und ein Ansaugschalldämpfer 5 angeordnet. Stromab des Ansaugschalldämpfers ist eine Vorrichtung 6 zur Einspritzung einer Flüssigkeit in den Zuströmkanal 3 angeordnet. Diese Vorrichtung dient insbesondere dazu, fein zerstäubte flüssige Wassertropfen in den Verdichter 1a einzubringen, wo diese, wie eingangs dargestellt, verdunsten und dadurch eine Innenkühlung des Verdichters bewirken. Stromab dieser Einspritzvorrichtung sind im Strömungsweg bis zum Verdichtereintritt keine grossflächigen Einbauten mehr angeordnet, abgesehen von einigen aus dem Stand der Technik bekannten Lagerstützen, welche aber nur eine sehr geringe Versperrung des Strömungskanals aufweisen, und eine strömungsgünstige Form aufweisen, derart, dass Flüssigkeitstropfen im Wesentlichen ohne Interaktion um sie herumgelenkt werden. Diese Anordnung von Flüssigkeitseinspritzdüsen unmittelbar stromauf des Verdichtereinlasses in der Hinsicht, dass keine Strömungshindernisse auf dem Strömungsweg liegen, und dass die Einspritzvorrichtung insbesondere stromab eines Luftfilters und eines Schalldämpfers angeordnet ist, ist an sich bereits aus der US 5,193,976 bekannt, und war schon zu dieser Zeit als notwendig erkannt worden, damit die bei der Einspritzung erzeugten Tropfen auch in den Verdichter gelangen anstatt sich an Einbauten des Zuströmkanals niederzuschlagen. Für die angestrebte Anwendung muss die Einspritzvorrichtung 6 in der Lage sein, sehr stark unterschiedliche Flüssigkeitsmassenströme bei hinreichender und möglichst gleichbleibender Zerstäubungsgüte in den Zuströmkanal einzubringen. Bei der Verwendung von Druckzerstäubern, welche vorteilhafterweise keine extern herbeigeführte Hilfsenergie benötigen, ist es hierzu an sich zwingend, eine unterschiedliche Anzahl von Einspritzdüsen mit Flüssigkeit zu beaufschlagen. Die Beaufschlagung der Düsen wird durch einen Ventilblock 8 realisiert, in dem eine Anzahl von Absperrorganen die Strömung zu bestimmten Einspritzdüsen oder Gruppen von Einspritzdüsen selektiv freigibt oder absperrt. Eine Pumpe 7 fördert die einzuspritzende Flüssigkeit unter Druck zu dem Ventilblock 8, wo die geförderte Flüssigkeitsmenge durch die Absperrorgane auf die einzelnen Düsen oder Düsengruppen aufgeteilt wird. Eine Druckmessstelle misst den Druck der zugeführten Flüssigkeit, und über eine geregelte Konstanthaltung des Druckes wird die Zerstäubungsgüte von Druckzerstäubern in der Einspritzvorrichtung 6 im wesentlichen konstant gehalten. So wird bei einer Druckverminderung beispielsweise die Drehzahl einer Kreiselpumpe 7 erhöht, und bei steigendem Druck vermindert, wodurch der Druck sehr einfach unabhängig vom tatsächlich durchgesetzten Massenstrom konstant gehalten werden kann, respektive der Massenstrom sich proportional zu den beaufschlagten Düsenquerschnitten einstellt.

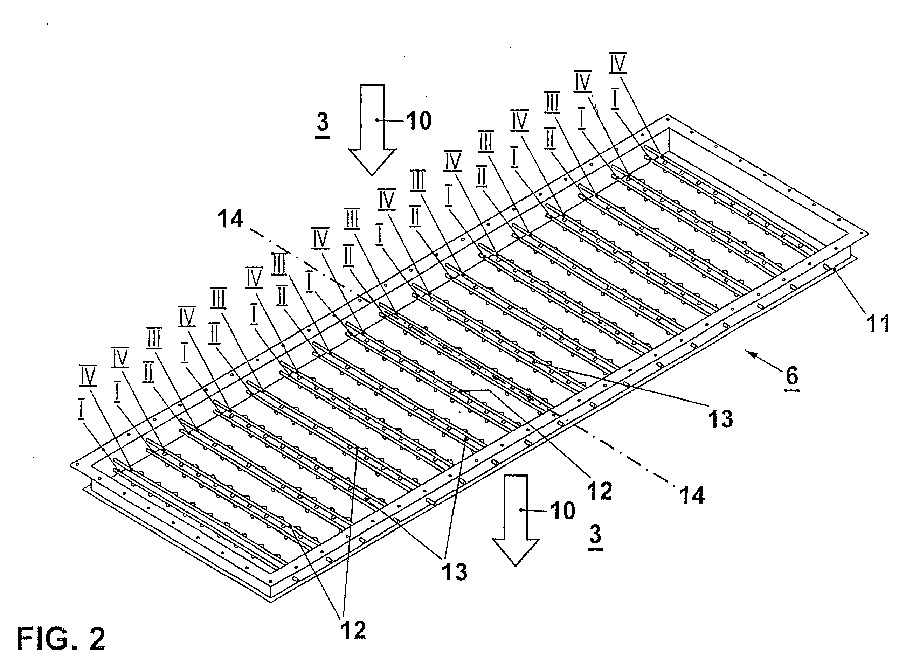

Figur 2 zeigt eine beispielhafte Ausgestaltung der Einspritzvorrichtung 6. In einem Rahmen 11 sind 34 Rohre 12 angeordnet, welche ihrerseits Zerstäuberdüsen 13 tragen. Die Einspritzvorrichtung 6 ist für eine normal zu der vom dem Rahmen 11 aufgespannten Fläche orientierte Luftströmung 10 konzipiert. In der beispielhaft dargestellten Ausführungsform sind jeweils zwei Rohre in Strömungsrichtung hintereinander angeordnet. Dies vermindert die Versperrung des Strömungskanals 3, und damit auch die durch die Einspritzvorrichtung hervorgerufenen Druckverluste. Die Einspritzdüsen der stromab gelegenen Rohre sind in Richtung der vorgesehenen Durchströmung orientiert. Die Einspritzdüsen der stromauf gelegenen Rohre weisen einen Winkel zu der Durchströmungsrichtung auf. Die von diesen Düsen zerstäubte Flüssigkeit wird jeweils in die Lücke zwischen zwei der stromab gelegenen Rohre eingespritzt; damit wird ein Niederschlag der eingespritzten Flüssigkeit auf den stromab gelegenen Rohren vermieden. Die gesamte Einspritzvorrichtung 6 ist bei einem bestimmten Nenndruck, welcher im Wesentlichen durch die Zerstäuberdüsen 13 vorgegeben ist, für einen bestimmten Gesamt-Nennmassenstrom vorgesehen. Auf jedem Rohr 12 sind an sich schon eine Anzahl von Düsen jeweils zu einer Gruppe zusammengefasst. Jedem Düsenrohr 12 ist ein relativer Teilmassenstrom zugeordnet, der sich als der unter Nennbedingungen durch das Rohr durchgesetzte Massenstrom, bezogen auf den gesamten Massenstrom der Einspritzvorrichtung 6, bestimmt. Unter der - keineswegs zwingenden! - Annahme, dass alle Düsen 13 identisch seien, welche Auslegung allerdings im Allgemeinen Vorteile mit sich bringt, ist dieser relative Teilmassenstrom der Anzahl der auf dem Düsenrohr 12 angeordneten Düsen 13 proportional. Bei einem Einspritz-Massenstrom, welcher unterhalb des Gesamt-Nennmassenstroms liegt, wird nur ein entsprechender Anteil der Düsenrohre mit Flüssigkeit beaufschlagt. Damit kann der Vordruck der Flüssigkeit, und somit der Druckabfall über die Zerstäuberdüsen und in der Konsequenz die Zerstäubungsgüte, konstant gehalten werden. Die Einspritzvorrichtung weist weiterhin eine Mittelachse oder Symmetrieachse 14 auf. Im Beispiel ist die Anordnung der Düsen auf jeder Seite der Mittelachse 14 spiegelbildlich zueinander. Um für den nachgeordneten Verdichter schädliche Asymmetrien der thermodynamischen Zustände zu vermeiden, werden gemäss der Erfindung auf jeder Seite der Symmetrieachse im wesentlichen so viele Rohre mit Flüssigkeit beaufschlagt, dass deren kumulierte Teilmassenströme auf jeder Seite der Symmetrieachse wenigstens näherungsweise identisch sind. Je nach Ausführung der Einspritzvorrichtung genügt es hierzu häufig, auf jeder Seite gleich viele Rohre, bevorzugt in spiegelbildlicher Anordnung, mit Flüssigkeit zu beaufschlagen. Von Vorteil ist es dabei auch, wenn Rohre mit Flüssigkeit beaufschlagt werden, die möglichst gleichmässig über den Strömungsquerschnitt verteilt sind. Die Ansteuerung wird, wie erwähnt, vereinfacht, wenn jeweils eine Anzahl von Rohren zu einer Gruppe zusammengefasst und gemeinsam angesteuert, das heisst gemeinsam mit Flüssigkeit beaufschlagt oder eben nicht beaufschlagt, werden. Beispielsweise werden Rohre zu vier Gruppen I, II, III, und IV zusammengefasst. Dabei werden in einer Ausführungsform die Gruppen so gewählt, dass die Gruppenmassenströme der einzelnen Gruppen geometrisch gestuft sind, insbesondere un bevorzugt mit einem Stufungsfaktor 2, wobei dies selbstverständlich auch Abweichungen um einige Prozent nach unten und oben einschliesst, die insbesondere durch die Diskretisierung der möglichen und realisierbaren Teilmassenstrominkremente bedingt sind. Damit beträgt der Gruppenmassenstrom der Gruppe II also das Doppelte dessen der Gruppe I, derjenige der Gruppe III das Doppelte desjenigen der Gruppe II, und so weiter. Bei vier Gruppen verhalten sich die Gruppenmassenströme also wenigstens näherungsweise wie 1:2:4:8. Mit einer derartigen binären Gruppenstufung können mit dem Schalten von nur 4 Düsengruppen, das heisst, bei einer vorzugsweisen entsprechenden Zusammenfassung von Düsenrohren auf jeweils ein Absperrorgan mit nur 4 Absperrorganen, bei im Wesentlichen gleichbleibender Zerstäubungsgüte 15 äquidistant gestufte diskrete Flüssigkeitsmassenströme eingestellt werden. Der Gruppenmassenstrom der kleinsten Gruppe beträgt dabei 1/15 des Gesamt-Nennmassenstroms; allgemein bestimmt sich der relative Gruppenmassenstrom der kleinsten Gruppe bei N binär gestuften Gruppen aus der Formel 1/2^{N-1}. Bei der Einstellung der Flüssigkeitsmassenströme mit 4 binär gestuften Gruppen wird das nachfolgend dargestellte Schaltschema verwendet:

| Beaufschlagte Gruppen | Flüssigkeitsmassenstrom in 1/15 des Gesamt-Nennmassenstroms |
|---|---|
| I | 1 |
| II | 2 |
| II+I | 3 |
| III | 4 |
| III+I | 5 |
| III+II | 6 |
| III+II+I | 7 |
| IV | 8 |
| IV+I | 9 |
| IV+II | 10 |
| IV+II+I | 11 |
| IV+III | 12 |
| IV+III+I | 13 |
| IV+III+II | 14 |
| IV+III+II+I | 15 |

Die Übertragung auf eine andere Anzahl binär gestufter Gruppen ergibt sich für den Fachmann im Lichte der oben gemachten Ausführungen ohne Weiteres. Aus der Figur 2 ist weiterhin ersichtlich, dass die einer Gruppe zugeordneten Rohre derart gewählt sind, dass sich jeweils eine möglichst homogene und symmetrische Verteilung der jeweils beaufschlagten Rohre über dem Strömungsquerschnitt ergibt.

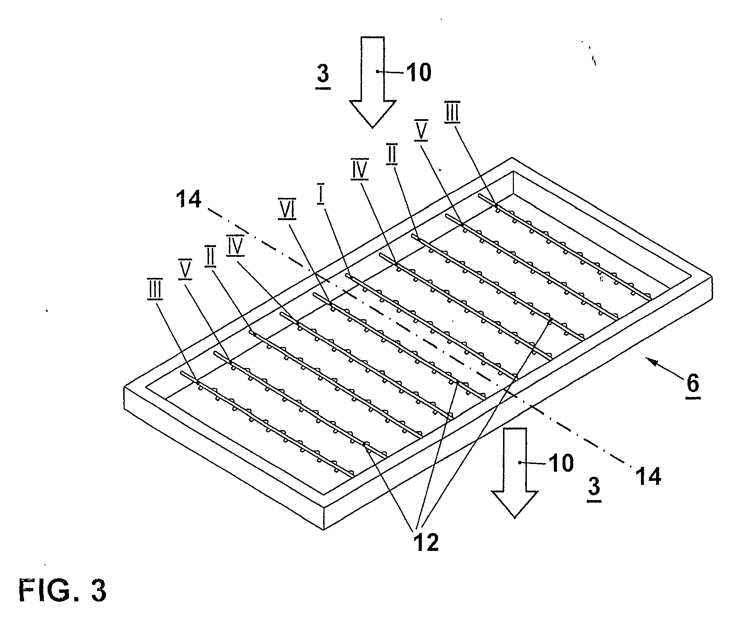

Figur 3 zeigt ein weiteres Beispiel für die Ausführung der Erfindung. Die dort dargestellte Einspritzvorrichtung 6 weist zehn Rohre 12 mit nicht dargestellten Zerstäubungsdüsen auf. Es wird bei den nachfolgenden Ausführungen zugrundegelegt, dass alle Rohre die gleich Anzahl identischer Zerstäubungsdüsen tragen. Die Düsenrohre sind zu sechs Gruppen I bis VI zusammengefasst. Dabei beträgt der relative Gruppenmassenstrom der Gruppe I und VI je 10%, bei Gruppe II, III, IV, und V jeweils 20%. Die Gruppierung ermöglicht es, den Einspritzmassenstrom in 10%-Inkrementen einzustellen. Die Gruppen II, III, IV und V sind symmetrisch zur Mittellinie 14 angeordnet, die Gruppen I und VI unsymmetrisch. das heisst, wenn entweder Gruppe I oder Gruppe VI in mit Flüssigkeit beaufschlagt wird, ohne dass gleichzeitig die andere der beiden Gruppen beaufschlagt wird, entsteht eine Asymmetrie. Diese ist durchaus tolerabel, da die Asymmetrie in geringem Abstand von der Mittellinie auftritt, sie also ein geringes "Moment" aufweist. Ähnliches gilt, wenn bei einer Vielzahl beaufschlagter Rohre nur eines unsymmetrisch betrieben wird; dann fällt die Asymmetrie nur gering ins Gewicht. Beim Betrieb der Gruppen zur Abdeckung des gesamten Einspritz-Massenstrombereiches kommen grundsätzlich zwei Schaltschemata in Betracht:

| Schaltschema 1: Beaufschlagte Gruppen | Schaltschema 2: Beaufschlagte Gruppen | Flüssigkeitsmassenstrom in % des Gesamt-Nennmassenstroms |
|---|---|---|
| I | I | 10 |
| II | I+VI | 20 |
| II+I | II+I | 30 |
| III+II | II+I+VI | 40 |
| III+II+I | III+II+1 | 50 |
| IV+III+II | III+II+I+VI | 60 |
| IV+III+II+I | IV+III+II+I | 70 |
| V+IV+III+II | IV+III+II+I+VI | 80 |
| V+IV+III+II+I | V+IV+III+II+I | 90 |
| V+IV+III+II+I+VI | V+IV+III+II+I+VI | 100 |

Während Schaltschema 2 geringere Asymmetrien aufweist, erfordert Schaltschema 1 weniger Schaltvorgänge.

Wiederum ist wohlverstanden, dass die dargestellten Schaltschemata keineswegs in zeitlicher Sequenz geschaltet werden müssen, sondern mit Vorteil alle gemäss einem Schaltschema für einen Sollmassenstrom notwendigen Gruppen gleichzeitig geschaltet werden.

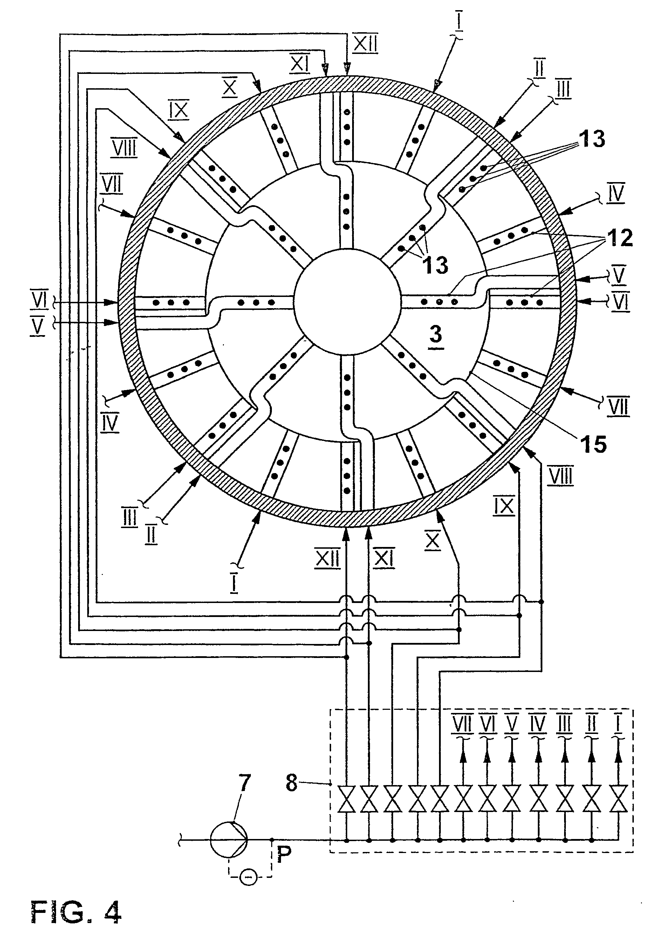

Figur 4 zeigt ein weiteres Ausführungsbeispiel einer Einspritzvorrichtung, welche nach dem erfindungsgemässen Verfahren betrieben werden kann. Die hier dargestellte Vorrichtung eignet sich insbesondere zur Verwendung in kreisförmigen oder nahezu kreisförmigen oder kreisringförmigen Strömungsquerschnitten, so im unmittelbaren Einlaufbereich eines Verdichters, im sogenannten "Bellmouth". Die - mehreren - Symmetrielinien sind hier aus Gründen der Übersichtlichkeit nicht eingezeichnet, für den Fachmann aber ohne Weiteres ersichtlich. Die Zerstäuberdüsen 13 sind auf Düsenrohren 12 angeordnet, wobei ein Teil der Düsenrohre Düsen in einem radial inneren Bereich des kreisringförmigen Zuströmkanals 3 trägt, und ein Teil anderer Teil Düsen in einem radial äusseren Bereich trägt. Im radial inneren Bereich sind die Düsen in einem Winkelabstand von 45° angeordnet, im äusseren Bereich im einem Winkelabstand von 22,5°, um eine homogenere Eindüsung erreichen zu können. Die Rohre sind durch einen Versteifungsring 15 gegeneinander abgestützt, um Flattern oder Vibrationen zu vermeiden. Die Beaufschlagung der Düsenrohre erfolgt über die Pumpe 7, welche auf einen konstanten Druck geregelt ist, und die im Ventilblock 8 angeordneten Absperrorgane. Jeweils zwei sich gegenüberliegende Düsenrohre sind zu einer Gruppe zusammengefasst, und werden durch ein gemeinsames Absperrorgan mit Flüssigkeit beaufschlagt. Ein mögliches Schaltschema, welches eine möglichst homogene und symmetrische Beladung der Gasströmung mit Tropfen ermöglicht, könnte sein: XII-VI-II-VIII-V-XI-IX-III-X-IV-VII-I, wobei auch andere Schaltschemata sich als geeignet erweisen können.

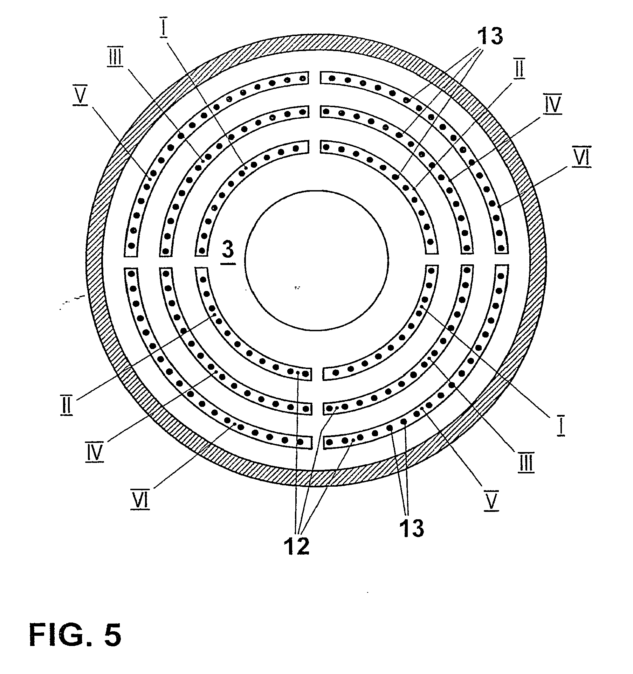

Bei der in Figur 5 dargestellten Einspritzvorrichtung sind die Düsenrohre 12 in ringsegmentförmiger Konfiguration im kreisringförmigen Zuströmkanal 3 angeordnet. Der radiale Abstand der Düsenrohre 12 nimmt nach aussen hin ab. Jeweils radial gegenüberliegende Rohre mit Zerstäuberdüsen sind wiederum zu einer Gruppe I, II, III, IV, V, VI zusammengefasst und werden gemeinsam mit Flüssigkeit beaufschlagt, wodurch Asymmetrien wiederum vermieden beziehungsweise minimiert werden.

Die in den Ausführungsbeispielen erläuterten Ausführungsformen stellen selbstverständlich keine Einschränkung der in den Ansprüchen dargestellten Erfindung dar; insbesondere ist es natürlich nicht zwingend, die Düsen oder Rohre in Gruppen zu schalten. Auch die in den Figuren 2 und 3 gezeigte äquidistante Anordnung der Düsenrohre ist keineswegs zwingend.

### Bezugszeichenliste:

- 1: Gasturbogruppe
- 1a: Verdichter
- 1b: Brennkammer
- 1c: Turbine
- 2: Zuströmbereich, Ansaugtrakt
- 3: Zuströmkanal
- 4: Luftfilter
- 5: Schalldämpfer
- 6: Einspritzvorrichtung
- 7: Flüssigkeitspumpe
- 8: Ventilblock
- 10: Gasströmung
- 11: Rahmen
- 12: Rohr, Düsenrohr
- 13: Düse, Einspritzdüse, Zerstäuberdüse
- 14: Symmetrielinie, Mittellinie
- 15: Stützring
- I: Düsen-/Rohrgruppe
- II: Düsen-/Rohrgruppe
- III: Düsen-/Rohrgruppe
- IV: Düsen-/Rohrgruppe
- V: Düsen-/Rohrgruppe
- VI: Düsen-/Rohrgruppe
- VII: Düsen-/Rohrgruppe
- VIII: Düsen-/Rohrgruppe
- IX: Düsen-/Rohrgruppe
- X: Düsen-/Rohrgruppe
- XI: Düsen-/Rohrgruppe
- XII: Düsen-/Rohrgruppe

## Patentansprüche

1. Verfahren zur Steuerung der Flüssigkeitseinspritzung in einen Zuströmkanal (3) einer Kraft- oder Arbeitsmaschine, mittels einer Einspritzvorrichtung (6), welche für einen Gesamt-Nennmassenstrom vorgesehen ist, und welche eine Anzahl von Zerstäuberdüsen (12), insbesondere Druckzerstäuberdüsen, aufweist, welche Düsen über den Querschnitt des Zuströmkanals verteilt angeordnet sind, und wobei jede Düse für den Durchsatz eines Teilstroms des Gesamt-Nennmassenstromes ausgelegt ist, wobei die Einspritzvorrichtung wenigstens eine Symmetrielinie (14) aufweist, bei welchem Verfahren bei einem Einspritzmassenstrom, welcher unterhalb des Gesamt-Nennmassenstromes liegt, nur ein Teil der Düsen mit Flüssigkeit beaufschlagt wird, **dadurch gekennzeichnet, dass**, um einen reduzierten Pumpabstand des Kompressors zu vermeiden, wenigstens eine Anzahl von Düsen zu einer Düsengruppe (I, II; ..) zusammengefasst werden, wobei jeweils eine Düsengruppe mit einem zugehörigen Gruppendurchsatz an Flüssigkeit gemeinsam mit Flüssigkeit beaufschlagt wird und
dass auf jeder Seite der Symmetrielinie (14) im Wesentlichen so viele Düsen (13) beaufschlagt werden, dass die Summe der Teilmassenströme der beaufschlagten Düsen auf jeder Seite der Symmetrielinie gleich ist.

2. Verfahren nach Anspruch 1, **dadurch gekennzeichnet, dass** auf jeder Seite der Symmetrielinie im Wesentlichen spiegelbildlich zueinander angeordnete Düsen mit Flüssigkeit beaufschlagt werden.

3. Verfahren nach einem der vorstehenden Ansprüche, **dadurch gekennzeichnet, dass** Düsen mit Flüssigkeit beaufschlagt werden, die möglichst gleichmässig über den Querschnitt verteilt angeordnet sind.

4. Verfahren nach einem der vorstehenden Ansprüche, **dadurch gekennzeichnet, dass** wenigstens eine Anzahl von Zerstäuberdüsen (13) auf wenigstens einem Düsenrohr (12) angeordnet ist, wobei die auf dem Düsenrohr angeordneten Düsen gemeinsam mit Flüssigkeit beaufschlagt werden.

5. Verfahren nach einem der vorstehenden Ansprüche, **dadurch gekennzeichnet, dass** jeweils eine Anzahl von Rohren zu einer Gruppe (I, II,..) zusammengefasst werden, wobei jeweils eine Rohrgruppe mit einem zugehörigen Gruppendurchsatz an Flüssigkeit gemeinsam mit Flüssigkeit beaufschlagt wird.

6. Verfahren nach einem der Ansprüche 1 bis 3 oder 5, **dadurch gekennzeichnet, dass** im Wesentlichen symmetrisch zur Symmetrieachse angeordnete Düsen und/oder Rohre zu einer gemeinsam zu beaufschlagenden Gruppe zusammengefasst werden.

7. Verfahren nach einem der Ansprüche 4 bis 6, **dadurch gekennzeichnet, dass** die Düsen und/oder Rohre derart zu Gruppen zusammengefasst werden, dass in jeder Gruppe der gleiche Teilmassenstrom als Gruppendurchsatz durchgesetzt wird.

8. Verfahren nach einem der Ansprüche 4 bis 6, **dadurch gekennzeichnet, dass** die Düsen und/oder Rohre derart zu Gruppen zusammengefasst und gemeinsam mit Flüssigkeit beaufschlagt werden, dass ein erster Teil der Gruppen jeweils einen ersten Gruppendurchsatz aufweist, und wenigstens eine weiteren Gruppe einen zweiten Gruppendurchsatz aufweist, welcher kleiner als der erste Gruppendurchsatz ist.

9. Verfahren nach Anspruch 8, **dadurch gekennzeichnet, dass** der zweite Gruppendurchsatz 50% des ersten Gruppendurchsatzes beträgt.

10. Verfahren nach einem der Ansprüche 4 bis 6, **dadurch gekennzeichnet, dass** die Düsen und/oder Rohre derart zu Gruppen zusammengefasst und mit Flüssigkeit beaufschlagt werden, dass die Gruppendurchsätze der einzelnen Gruppen eine geometrische Stufung aufweisen.

11. Verfahren nach Anspruch 10, **dadurch gekennzeichnet, dass** der Gruppendurchsatz einer Gruppe jeweils das Doppelte des Gruppendurchsatzes der nächstkleineren Gruppe beträgt, dergestalt, dass die Gruppen eine binäre Stufung der Gruppendurchsätze aufweisen.

12. Verfahren nach einem der vorstehenden Ansprüche, **dadurch gekennzeichnet, dass** der Druckabfall über die Einspritzdüsen konstantgehalten wird.

13. Verfahren nach einem der vorstehenden Ansprüche, **dadurch gekennzeichnet, dass** der Vordruck der Flüssigkeit vor dem Durchströmen der Einspritzdüsen konstantgehalten wird.

14. Vorrichtung zur Durchführung eines Verfahrens gemäss einem der Ansprüche 4 bis 13, **dadurch gekennzeichnet, dass** die Düsen und/oder Rohre mit Versorgungsleitungen verbunden sind, wobei alle Versorgungsleitungen der Düsen und/oder Rohre einer Gruppe an einer stromauf gelegenen Stelle verbunden und über ein gemeinsames Absperrorgan ansteuerbar sind und dass wenigstens eine Anzahl von Düsen zu einer Düsengruppe (I, II; ..) mit einem zugehörigen Gruppendurchsatz an Flüssigkeit zusammengefasst ist und dass auf jeder Seite der Symmetrielinie (14) im Wesentlichen so viele Düsen (13) zu einer Gruppe zusammengefasst sind, dass die Summe der einspitzbaren Teilmassenströme durch diese Düsen auf jeder Seite der Symmetrielinie gleich ist.

15. Vorrichtung nach Anspruch 14, **dadurch gekennzeichnet, dass** alle Düsen und/oder Rohre identisch sind.

16. Vorrichtung nach einem der Ansprüche 14 oder 15, **dadurch gekennzeichnet, dass** die Düsen und/oder Rohre äquidistant im Strömungskanal angeordnet sind.

## Claims

1. Method for controlling the injection of liquid into an inflow passage (3) of a prime mover or working machine by means of an injection device (6) which is provided for an overall nominal mass flow and which has a number of atomizing nozzles (12), especially mechanical atomizing nozzles, which nozzles are in a distributed arrangement over the cross section of the inflow passage, and wherein each nozzle is designed for the throughput of a partial flow of the overall nominal mass flow, wherein the injection device has at least one symmetry line (14), in which method only some of the nozzles are pressurized with liquid in the case of an injected mass flow which lies below the overall nominal mass flow, **characterized in that**, in order to avoid a reduced surge margin of the compressor, at least a number of nozzles are combined to form a nozzle group (I, II; ..), wherein a nozzle group with an associated group throughput is pressurized with liquid as a body in each case and
**in that**, on each side of the symmetry line (14), nozzles (13) are essentially pressurized in such number that the sum of the partial mass flows of the pressurized nozzles on each side of the symmetry line is equal.

2. Method according to Claim 1, **characterized in that**, on each side of the symmetry line, nozzles which are arranged essentially in a mirror-image-like manner in relation to each other are pressurized with liquid.

3. Method according to one of the preceding claims, **characterized in that** nozzles which are in a distributed arrangement which is as uniform as possible over the cross section are pressurized with liquid.

4. Method according to one of the preceding claims, **characterized in that** at least a number of atomizing nozzles (13) are arranged on at least one nozzle pipe (12), wherein the nozzles which are arranged on the nozzle pipe are pressurized with liquid as a body.

5. Method according to one of the preceding claims, **characterized in that** a number of pipes are combined to form a group (I, II;..) in each case, wherein a pipe group with an associated group throughput of liquid is pressurized with liquid as a body in each case.

6. Method according to one of Claims 1 to 3 or 5, **characterized in that** nozzles and/or pipes which are arranged essentially symmetrically with respect to the symmetry axis are combined to form a group which is to be pressurized as a body.

7. Method according to one of Claims 4 to 6, **characterized in that** the nozzles and/or pipes are combined to form groups in such a way that in each group the same partial mass flow is passed through as the group throughput.

8. Method according to one of Claims 4 to 6, **characterized in that** the nozzles and/or pipes are combined to form groups and commonly pressurized with liquid in such a way that a first section of the groups has a first group throughput in each case, and at least one further group has a second group throughput which is less than the first group throughput.

9. Method according to Claim 8, **characterized in that** the second group throughput is 50% of the first group throughput.

10. Method according to one of Claims 4 to 6, **characterized in that** the nozzles and/or pipes are combined to form groups and pressurized with liquid in such a way that the group throughputs of the individual groups have a geometric staging.

11. Method according to Claim 10, **characterized in that** the group throughput of a group is double the group throughput of the group the next size smaller in each case in such a way that the groups have a binary staging of the group throughputs.

12. Method according to one of the preceding claims, **characterized in that** the pressure drop across the injection nozzles is kept constant.

13. Method according to one of the preceding claims, **characterized in that** the initial pressure of the liquid before flowing through the injection nozzles is kept constant.

14. Device for implementing a method according to one of Claims 4 to 13, **characterized in that** the nozzles and/or pipes are connected to supply lines, wherein all the supply lines of the nozzles and/or pipes of a group are connected at a point located upstream and can be activated via a common shut-off element, and **in that** at least a number of nozzles are combined to form a nozzle group (I, II;..) with an associated group throughput of liquid, and **in that** on each side of the symmetry line (14) nozzles (13) are essentially combined to form a group in such number that the sum of the injectable partial mass flows through these nozzles on each side of the symmetry line is equal.

15. Device according to Claim 14, **characterized in that** all the nozzles and/or pipes are identical.

16. Device according to either of Claims 14 and 15, **characterized in that** the nozzles and/or pipes are arranged equidistantly in the flow passage.

## Revendications

1. Procédé pour commander l'injection de liquide dans un canal d'amenée (3) d'une machine motrice ou d'une machine de travail au moyen d'un dispositif d'injection (6) qui est prévu pour un débit massique nominal total, et qui présente une pluralité de buses de pulvérisation (12), en particulier des buses de pulvérisation sous pression, lesquelles buses sont disposées de manière répartie sur la section transversale du canal d'amenée, et chaque buse étant conçue pour permettre le débit d'un flux partiel du flux massique nominal total, le dispositif d'injection présentant au moins un axe de symétrie (14), dans lequel procédé, dans le cas d'un flux massique d'injection qui est inférieur au flux massique nominal total, seulement une partie des buses sont sollicitées avec du liquide, **caractérisé en ce que** pour éviter un écart réduit de la marge au pompage, au moins un certain nombre de buses sont réunies pour former un groupe de buses (I, II ; ..), un groupe de buses étant à chaque fois sollicité conjointement avec du liquide avec un débit de groupe de liquide associé, et
**en ce que** de chaque côté de l'axe de symétrie (14), est essentiellement sollicité un nombre de buses (13) tel que la somme des flux massiques partiels des buses sollicitées soit identique de chaque côté de l'axe de symétrie.

2. Procédé selon la revendication 1, **caractérisé en ce que** de chaque côté de l'axe de symétrie sont sollicitées avec du liquide des buses disposées essentiellement suivant une symétrie spéculaire les unes par rapport aux autres.

3. Procédé selon l'une quelconque des revendications précédentes, **caractérisé en ce que** des buses qui sont disposées de manière réparties aussi uniformément que possible sur la section transversale sont sollicitées avec du fluide.

4. Procédé selon l'une quelconque des revendications précédentes, **caractérisé en ce qu'**au moins un certain nombre de buses de pulvérisation (13) sont disposées sur au moins un tube de buses (12), les buses disposées sur le tube de buses étant sollicitées conjointement avec du liquide.

5. Procédé selon l'une quelconque des revendications précédentes, **caractérisé en ce qu'**à chaque fois un certain nombre de tubes sont réunis en un groupe (I, II, ..), un groupe de tubes étant à chaque fois sollicité conjointement avec du liquide avec un débit de groupe de liquide associé.

6. Procédé selon l'une quelconque des revendications 1 à 3 ou 5, **caractérisé en ce que** des buses et/ou des tubes disposés essentiellement symétriquement par rapport à l'axe de symétrie sont réunis en un groupe devant être sollicité en commun.

7. Procédé selon l'une quelconque des revendications 4 à 6, **caractérisé en ce que** les buses et/ou les tubes sont réunis en groupes de telle sorte que le même flux massique partiel passe à travers chaque groupe en tant que débit de groupe.

8. Procédé selon l'une quelconque des revendications 4 à 6, **caractérisé en ce que** les buses et/ou les tubes sont réunis en groupes et sont sollicités en commun avec du liquide de telle sorte qu'une première partie des groupes présente à chaque fois un premier débit de groupe, et qu'au moins un groupe supplémentaire présente un deuxième débit de groupe qui est inférieur au premier débit de groupe.

9. Procédé selon la revendication 8, **caractérisé en ce que** le deuxième débit de groupe représente 50 % du premier débit de groupe.

10. Procédé selon l'une quelconque des revendications 4 à 6, **caractérisé en ce que** les buses et/ou les tubes sont réunis en groupes et sont sollicités avec du fluide de telle sorte que les débits de groupe des groupes individuels présentent une gradation géométrique.

11. Procédé selon la revendication 10, **caractérisé en ce que** le débit de groupe d'un groupe vaut à chaque fois le double du débit de groupe du groupe plus petit suivant, de telle sorte que les groupes présentent une gradation binaire des débits de groupe.

12. Procédé selon l'une quelconque des revendications précédentes, **caractérisé en ce que** la chute de pression est maintenue constante par le biais des buses d'injection.

13. Procédé selon l'une quelconque des revendications précédentes, **caractérisé en ce que** la pression de admission du liquide est maintenue constante avant l'écoulement à travers les buses d'injection.

14. Dispositif pour mettre en oeuvre un procédé selon l'une quelconque des revendications 4 à 13, **caractérisé en ce que** les buses et/ou les tubes sont connectés à des conduites d'alimentation, toutes les conduites d'alimentation des buses et/ou des tubes d'un groupe étant connectées en un endroit situé en amont et pouvant être commandées par le biais d'un organe d'arrêt commun, et **en ce qu'**au moins un certain nombre de buses sont réunies en un groupe de buses (I, II ; ..) avec un débit de groupe de liquide associé, et **en ce que** de chaque côté de l'axe de symétrie (14) sont réunies en un groupe essentiellement un nombre de buses (13) tel que la somme des flux massiques partiels pouvant être injectés à travers ces buses soit identique de chaque côté de l'axe de symétrie.

15. Dispositif selon la revendication 14, **caractérisé en ce que** toutes les buses et/ou les tubes sont identiques.

16. Dispositif selon l'une quelconque des revendications 14 ou 15, **caractérisé en ce que** les buses et/ou les tubes sont disposés de manière équidistante dans le canal d'écoulement.
